# EUROPEAN PATENT SPECIFICATION

(11) **EP 1 395 451 B1**
(45) Date of publication and mention of the grant of the patent: **25.05.2011**
(21) Application number: 02771800.6
(22) Date of filing: 12.03.2002
(51) Int. Cl.: B60G 7/00, B60P 7/00, B62D 7/00, F16B 7/06, F16B 35/02, F16B 35/00

(54) **LINK ASSEMBLY FOR A VEHICLE SUSPENSION SYSTEM**
VERBINDUNGSANORDNUNG FÜR EIN FAHRZEUGAUFHÄNGUNGSSYSTEM
ENSEMBLE DE LIAISON POUR SYSTEME DE SUSPENSION DE VEHICULE

(30) Priority: 18.05.2001 US 860880
(43) Date of publication of application: 10.03.2004
(73) Proprietor: MacLean-Fogg GmbH, 65835 Liederbach (DE)
(72) Inventor: PAZDIREK, Jiri, Schaumburg, IL 60193 (US)
(74) Representative: Grünecker, Kinkeldey, Stockmair & Schwanhäusser Anwaltssozietät
(86) International application number: PCT/US2002/007467
(87) International publication number: WO 2002/094591

(56) References cited:
- EP-A1- 0 715 086
- FR-A- 1 260 978
- FR-A- 2 053 718
- US-A- 1 871 918
- US-A- 1 952 115
- US-A- 2 169 969
- US-A- 2 477 447
- US-A- 4 519 467
- US-A- 4 944 523
- US-A- 5 449 193
- US-A- 5 551 722
- US-A- 5 704 631
- US-A- 5 807 010
- US-B1- 6 402 171

## Description

The invention relates to a link assembly connecting an arm of a stabilizer torsion bar to a suspension arm in a vehicle suspension system, comprising a shaft having a threaded end section, and a pair of grommets made of resilient material mounted on the shaft for engaging a respective arm between them.

Motor vehicles have long been provided with independent suspension systems to absorb road shocks and other vibrations and provide a smoother, more comfortable ride. In suspension systems of 1his type, a stabilizer bar is normally incorporated to Increase roll resistance and improve the steering stability of the vehicle. Typically, the stabilizer bar is a torsion rod which extends transversely of the vehicle. It has an integral crank arm provided at each end. The rod is rotatably supported from the vehicle chassis adjacent each crank arm, and each crank arm is coupled to a suspension arm by a connector link assembly.

When the vehicle is subject to forces which cause it to roll, the crank arms pivot relatively about the longitudinal axis of the rod, against the torsional resistance of the rod. Torsion forces which are exerted through the crank arms urge the suspension arms of the vehicle back toward their normal position. This type of stabilizer bar acts in a manner such that when paired left and right wheels differ in level from each other due to a comering maneuver, for example, the vehicle body will be prevented from excessive rolling or leaning to either side by torsional resistant of the stabilizer bar.

The link assembly, which connect the crank arms of the torsion rod to the vehicle body and to the suspension arms, is generally one of two types. It is either a bolt-type assembly or a stud-type assembly. In a bolt-type assembly a suitably dimensioned bolt and nut are used to connect the stabilizer bar to the vehicle suspension arm. Pliable bushings or grommets assembled on the bolt engage the exterior surfaces of the stabilizer bar arms and the vehicle suspension arms. A pair of similarly shaped grommets engage the interior surfaces of the respective vehicle elements and are in engagement with a pair of inner washers which are maintained at a predetermined spaced distance by a cylindrical sleeve mounted on the shaft of the bolt.

In a stud-type assembly, the stud shaft has both ends threaded. Accordingly, retainer nuts are threaded onto both ends of the stud shaft Once again, pliable bushings or grommets assembled on the stud shaft engage the exterior surfaces of the stablizer bar arms and the vehicle suspension arms. A pair of similarly shaped grommets engage the interior surfaces of the respective vehicle elements and are in engagement with a pair of inner washers which are maintained at a predetermined spaced distance by a cylindrical sleeve mounted on the shaft of the stud.

Regardless of whether a bolt or stud-type link assembly is employed, prior art constructions have generally suffered from complexity and cost shortcomings. Such assemblies normally comprises at least four, and sometimes as many as six different components. Furthermore, assembly is normally done on the vehicle assembly line from these many components.

In US-A-5 551 722 a stud-type link as well as a bolt-type link according to the preamble of claim 1 have been disclosed. The grommets of these links are mounted directly on the shaft. Separately manufactured washers are inserted into grooves of flanges of the grommets serving as contact surfaces for the bolt head or for nuts threaded onto the threaded section of the shaft. In the stud-type link, the inner grommets are held at a distance from each other by a separate spacer element made of a reinforced plastic such as fiberglass filled nylon or polyester. This known link assembly is complex in structure and difficult to assemble.

US-A-5 449 193 again discloses a link assembly which can be either of the stud or the bolt type. The grommets are mounted directly on the shaft, The two outer ones, have washers inserted into internal grooves resting against the bolt head or being integral with a nut serving to thread the grommet onto a threaded section of the shaft. The two interior grommets are held at a distance by a separate spacer element made of plastic and consisting of a sleeve closed at both ends by separately manufactured washers. This structure is also rather complex and comprises many parts.

EP-A-715 086 B1 discloses an elastic rivet mounted on a sleeve having a radial flange. The rivet can be axially compressed between the flange and a washer being engaged by a nut threaded onto the threaded portion of a bolt which also supports said rivet.

FR-A-1 260 978 also discloses an elastic rivet held between two flanged sleeves, one of which can be threaded onto the threaded portion of a bolt so that the rivet can be axially compressed between the bolt head and its threaded section.

US-A-1 952 115 discloses a shackle consisting of two links and connecting a leaf-spring assembly of an automobile to a side member of an automobile chassis. The links have eyes at both ends, adjacent eyes being connected by studs provided with threaded sections at both ends. Pairs of internally threaded sleeve nuts with elastic cushions being mounted on the sleeve portion of said nuts are threaded onto the threaded sections of the studs. Axial movement of the inner sleeved nuts towards each other is prevented by their abutting the front ends of sleeve-shaped eyes provided at the ends of the chassis part and of the spring element, said eyes being fixedly mounted on the studs by means of bushings clamped to the studs by longitudinally slitted, tapered nipples.

An object of the present intention is to provide an improved suspension link assembly for a vehicle suspension system.

Another object is to provide an improved type suspension link assembly which is simpler in construction and less expensive than existing link assemblies.

Still another object is to provide a suspension link assembly which is easier to fabricate and install than existing link assemblies.

The above objects are attained by the invention in that each grommet is fitted onto a tubular, internal threaded segment of a sleeve nut, said sleeve nut having a disc-shaped head at its one end distant from the respective arm, each sleeve nut being threaded onto the threaded end section of the shaft with its head facing away from the head of the other sleeve nut of the pair of grommets and the head of the sleeve nut distant from the free end of the shaft resting against a stop formed out of the material of the shaft as a chamfer or as upsets.

Providing the grommets with internal threaded sleeve nuts makes them easier to assemble and avoids the requirement of separate nuts and washers. Instead of maintaining the distance between the two inner grommets by means of a separate spacer element, the invention provides stops on the shaft made directly out of the shaft material. Thus, the invention reduces the number of parts and simplifies manufacture and assembly..

Further improvements and advantages of the invention are provided by the features of subclaims 2-8.

The invention, including its construction and method of operation, is illustrated more or less diagrammatically in the drawings, which:
FIGURE 1 is a perspective view of a link assembly comprising features of the present invention;
FIGURE 2 is an end view of the link assembly of FlGURE 1;
FIGURE 3 is a sectional view along line 3-3 of FIGURE 2, with portions of a vehicle stabilizer bar crank arm and a suspension system arm shown connected by the link assembly of FIGURES 1 and 2;
FIGURE 4 is an enlarged side elevational view of a sleeve nut and grommet sub-assembly for the link assembly of the invention;
FIGURE 5 is an exploded view of the three sub-assemblies which make up a suspension link assembly embodying features of the present invention;
FIGURE 6 is a side elevational view of a modifled stud shaft;
FIGURE 7 is a sectional view taken along line 7-7 of FIGURE 6;

### DESCRIPTION OF THE PREFERRED EMBODIMENT

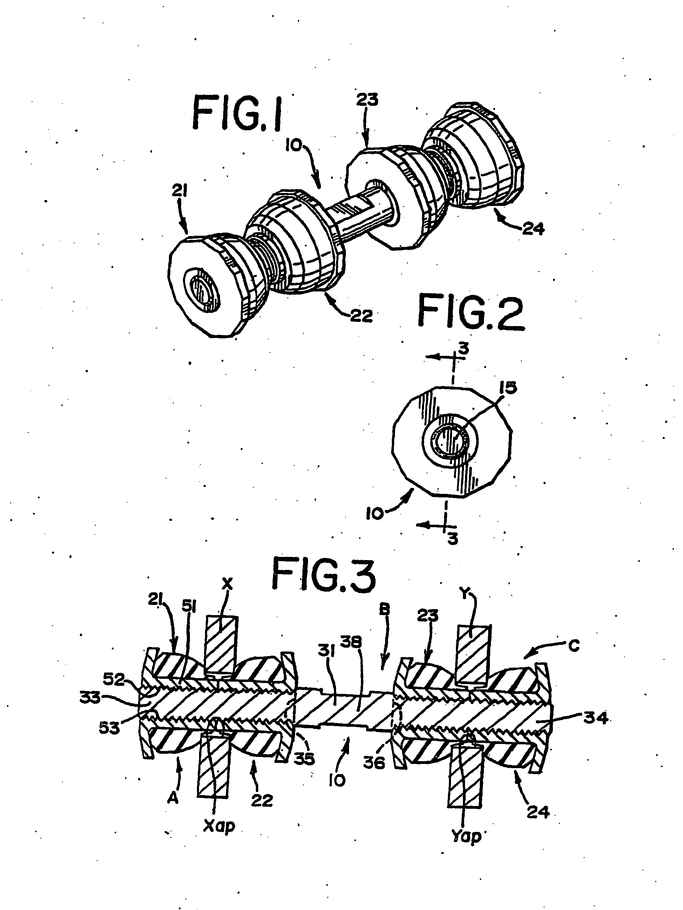

Referring now to the drawings, a suspension link assembly embodying features of the invention is seen generally at 10 in FIGURES 1-3. The link assembly 10 includes a stud shaft 15 on which four identical sleeve nut and grommet sub-assemblies 21-24 are mounted.

The stud shaft 15 includes a shaft body 31 of predetermined length. The shaft body 31 has threaded sections 33 and 34 at each end. The threaded end sections 33 and 34 terminate in stops formed by chamfers 35 and 36, respectively. The chamfers 35 and 36 are at opposite ends of a center spacer section 38. The section 38 has flats formed on opposite sides, as at 39, for reasons hereinafter explained. The stud shaft 15 is fabricated of steel which is plated for corrosion resistance.

Since the nut and grommet sub-assemblies 21-24 are identical, only the sub-assembly 21 is described in detail. Corresponding reference numerals may be applied to corresponding components in each of the other sub-assemblies 22-24.

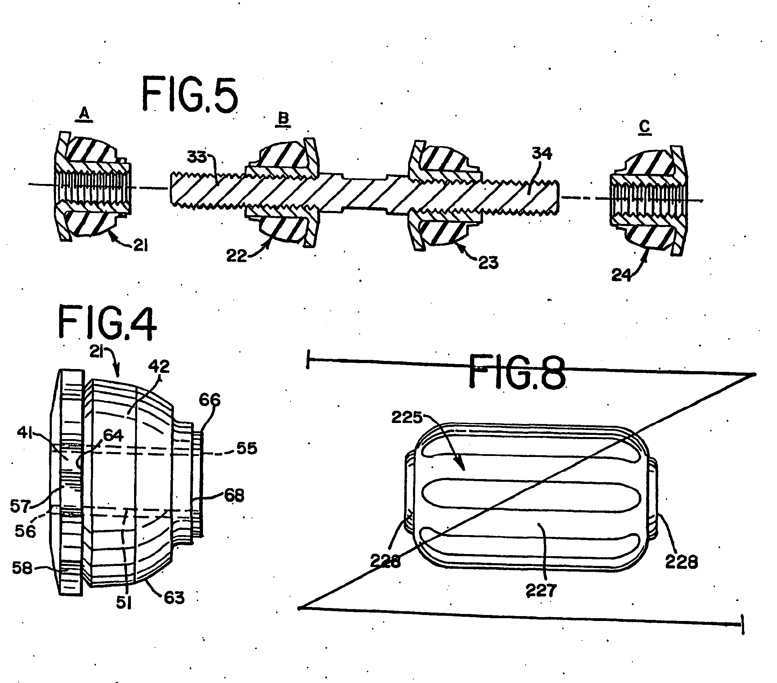

Referring to FIGURE 4 in addition to FIGURES 1-3, the sub-assembly 21 comprises a tubular sleeve nut 41 and a grommet 42. The nut 41 is formed from heat treated carbon steel. The grommet 42 is molded of resilient material such as natural rubber or polyurethane or the like.

The nut 41 comprises a tubular segment 51 with a bore 52 which is internally threaded at 53. Both ends of the threaded bore 52 are formed with a 45° chamfer, as at 55 and 56. A shallow, cup-shaped head 57 is formed at one end of the tubular segment 51. The periphery 58 of the head is polygon-shaped, for reasons hereinafter explained.

The molded elastomer grommet 42 has a cylindrical bore 61 through it. The bore 61 has an inside diameter (ID) which is slightly smaller than the outside diameter (OD) of the tubular segment 51 in the nut 41.

The grommet 42 also has a generally "bee-hive" shape external surface 63 on its inner end. Its outer end has a slightly spherical surface 64 which is complementary in shape to the disc-shaped head 57 in the nut 41.

The sleeve nut and grommet sub-assembly 21 is assembled by press fitting a grommet 42 over a tubular segment 51 of a nut 41 until the surface 64 of the grommet seats against the cup-shaped head 57 of the nut. Since the ID of the bore 61 is slightly smaller than the OD of the nut's tubular segment 51, the grommet resiliently grips the nut 41. When assembled, the free end 66 of the tubular segment 51 on the nut 41 protrudes slightly beyond the surface end 68 of the grommet 42.

Referring now also to FIGURE 5, the three different components of the assembly 10, the stud shaft 15, sleeve nuts 41 and grommets 42 are optionally preassembled by the vehicle manufacturer into three component assemblies A, B and C before being sent as a kit to the assembly line. In a pre-assembly operation, four sleeve nut and grommet sub-assemblies 21-24 are assembled in the afore-described manner. Two of the sleeve nut and grommet sub-assemblies, 22 and 23 in the drawings, are then threaded onto opposite end sections 33 and 34, respectively, of the stud shaft body 31. This creates the component assembly B. Two sleeve nut and grommet sub-assemblies 21 and 24, which are identical to each other, comprise the component assemblies A and C.

Referring again to FIGURE 3, the three component assemblies A, B and C are mated with the suspension arm X and a torsion bar arm Y in the manner illustrated. The opposite ends of the component assembly B are inserted through suitably dimensioned apertures Xap and Yap in the respective arms X and Y. The sleeve nut and grommet sub-assembly 21 is then threaded onto one end of the shaft body 31 and the sub-assembly 24 is threaded onto the other end.

This initial assembly is easily accomplished by hand. Only three items (assemblies A, B and C) need be handled by the assembler so assembly time is minimized. The assembler then grips the shaft body 31 on the flats 34 with a wrench and tightens the sleeve nuts 41 (the periphery 58 of the head 57 is polygon shaped) with another wrench.

When fully assembled, the ends 68 of the tubular segments 51 abut each. The faces 63 of opposed bushings 42, which engage respective arms X and Y, are then spaced from each other a distance which just accommodates the thickness of corresponding arms.

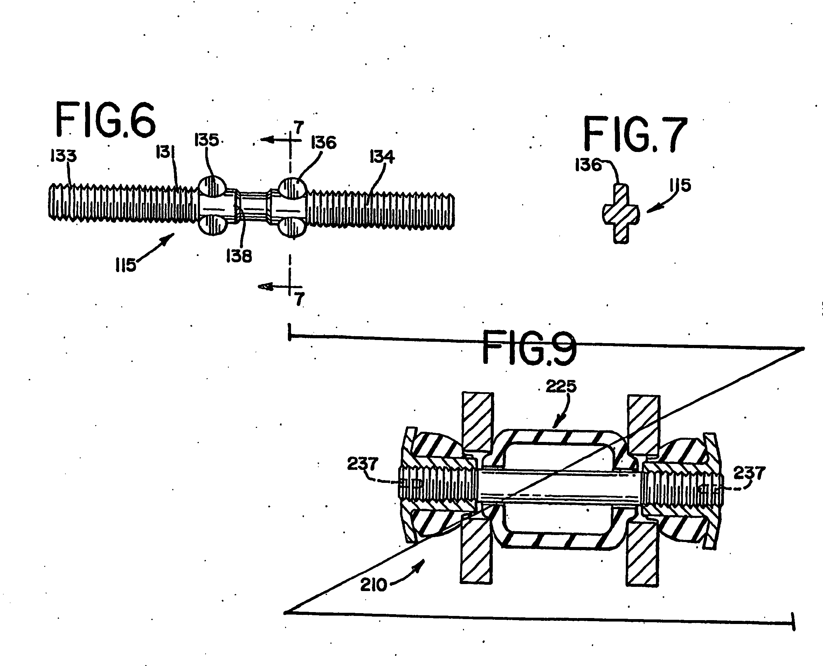

Referring now to FIGURE 6 and 7 of modified form of stud shaft for a link assembly 10 is shown at 115. The stud shaft 115 comprises a shaft body 131 having threaded end sections 133 and 134, and a center spacer section 138.

One end of the spacer section 138 has four protruding upsets 135 formed therein. The other end has four protruding upsets 138 formed therein. Flats 139 are formed on opposite sides of the spacer section 138.

The stud shaft 115 is employed in the manner of link assembly 10. The upsets 135 and 136 serve as stops for two inside sleeve nut and grommet sub-assemblies identical to sub-assemblies 22 and 23 previously described. In all other respects the link assembly would be identical to assembly 10.

## Claims

1. Link assembly connecting an arm (Y) of a stabilizer torsion bar to a suspension arm (X) in a vehicle suspension system, comprising a shaft (15 resp. 115) having a threaded end section (33, 34 resp. 133, 134), and a pair of grommets (42) made of resilient material¹ mounted on the shaft (15 resp. 115) for engaging a respective arm (X resp. Y) between them,
**characterized in that**
each grommet (42) is fitted onto a tubular, internally threaded segment (51) of a sleeve nut (41), said sleeve nut (41) having a disc-shaped head (57) at its one end distant from the respective arm (X resp. Y) each sleeve nut (41) being threaded onto the threaded end section (33, 34 resp. 133, 134) of the shaft (15 resp. 115) with its head (57) facing away from the head (57) of the other sleeve nut (41) of the pair of grommets (41) and the head (57) of the sleeve nut (41) distant from the free end of the shaft (15 resp. 115) resting against a stop formed out of the material of the shaft (15 resp. 115) as a chamfer (35 resp. 36) or as upsets (135 resp. 136)

2. Link assembly according to claim 1, **characterized in that** each head (57) has a polygon-shaped periphery (58).

3. Link assembly according to claim 1 and/or 2, **characterized in that** the shaft (15 resp. 115) has threaded end sections (33, 34 resp. 133, 134) at both of its ends with pairs of grommets (42) fitted onto sleeve nuts (41) threaded onto both end sections.

4. Link assembly according to one of claims 1 to 3, **characterized in that** all grommets (42) and sleeve nuts (41) are identical to each other

5. Link assembly according to one of claims 1 to 4, **characterized in that** the head (57) of each sleeve nut (41) is cup-shaped and each grommet (42) has a curved surface (64) at one end complementary in shape to said cup-shaped head (57) and an opposite face (63) for engaging an arm (X resp. Y).

6. Link assembly according to one of claims 1 to 5, **characterized in that** the grommets (42) are press fitted onto the tubular segments (51) of the sleeve nuts (41).

7. Link assembly according to claim 3 provided as an assembly kit consisting of three component sub-assemblies, comprising first and second component sub-assemblies consisting each of a sleeve nut (41) and a grommet (41) fitted thereon, and a third component sub-assembly consisting of a shaft (15 resp. 115) having a threaded end section (33, 34 resp. 133, 134) at each end and of a third and fourth sleeve nut (41) and grommet (42) sub-assemblies threaded onto opposite threaded end sections (33, 34 resp. 133, 134), each of said sleeve nut and grommet sub-assemblies being identical to each other sleeve nut and grommet sub-assemblies

8. Link assembly according to one of claims 1 to 7, **characterized in that** when assembled, the ends (68) of the tubular segments (51) opposite to the heads (57) of each pair of grommet mounting sleeve nuts (41) abut each other.

## Patentansprüche

1. Verbindungsanordnung zum Verbinden eines Armes (Y) einer Stabilisatortorsionsstange mit einem Aufhängungsarm (X) in einem Fahrzeugaufhängungssystem, umfassend einen Schaft (15 bzw. 115) mit einem gewindeartigen Endabschnitt (33, 34 bzw. 133, 134) und ein Paar von Durchführungsdichtungen (42), die aus elastischem Material bestehen und an dem Schaft (15 bzw. 115) montiert sind, um einen jeweiligen Arm (X bzw. Y) zwischen sich in Eingriff zu nehmen,
**dadurch gekennzeichnet, dass**
jede Durchführungsdichtung (42) auf ein rohrförmiges, innengewindeartiges Segment (51) einer Überwurfmutter (41) gepasst ist, wobei die Überwurfmutter (41) einen scheibenförmigen Kopf (57) an ihrem einen Ende entfernt von dem jeweiligen Arm (X bzw. Y) aufweist, jede Überwurfmutter (41) auf den gewindeartigen Endabschnitt (33, 34 bzw. 133, 134) des Schaftes (15 bzw. 115) geschraubt ist, wobei deren Kopf (57) von dem Kopf (57) der anderen Überwurfmutter (41) des Paares von Durchführungsdichtungen (41) wegweist und der Kopf (57) der Überwurfmutter (41) entfernt von dem freien Ende des Schaftes (15 bzw. 115) an einem Anschlag ruht, der aus dem Material des Schaftes (15 bzw. 115) als Verjüngung (35 bzw. 36) oder als Aufwürfe (135 bzw. 136) ausgebildet ist.

2. Verbindungsanordnung nach Anspruch 1, **dadurch gekennzeichnet, dass** jeder Kopf (57) einen polygonförmigen Umfang (58) aufweist.

3. Verbindungsanordnung nach Anspruch 1 und/oder 2, **dadurch gekennzeichnet, dass** der Schaft (15 bzw. 115) gewindeartige Endabschnitte (33, 34 bzw. 133, 134) an seinen beiden Enden aufweist, wobei Paare von Durchführungsdichtungen (42) auf Überwurfmuttern (41) gepasst sind, die auf beide Endabschnitte geschraubt sind.

4. Verbindungsanordnung nach einem der Ansprüche 1 bis 3, **dadurch gekennzeichnet, dass** sämtliche Durchführungsdichtungen (42) und Überwurfmuttern (41) identisch zueinander sind.

5. Verbindungsanordnung nach einem der Ansprüche 1 bis 4, **dadurch gekennzeichnet, dass** der Kopf (57) jeder Überwurfmutter (41) schalenförmig ist und jede Durchführungsdichtung (42) eine der Form nach zu dem schalenförmigen Kopf (57) komplementäre gekrümmte Oberfläche (64) an einem Ende und eine entgegengesetzte Fläche (63) zur Ineingriffnahme eines Armes (X bzw. Y) aufweist.

6. Verbindungsanordnung nach einem der Ansprüche 1 bis 5, **dadurch gekennzeichnet, dass** die Durchführungsdichtungen (42) auf die rohrförmigen Segmente (51) der Überwurfmuttern (41) druckgepasst sind.

7. Verbindungsanordnung nach Anspruch 3, die als Anordnungsbausatz vorgesehen ist, der aus drei Bauteilunteranordnungen besteht, umfassend erste und zweite Bauteilunteranordnungen, die jeweils aus einer Überwurfmutter (41) und einer darauf gepassten Durchführungsdichtung (42) bestehen, und eine dritte Bauteilunteranordnung, die aus einem Schaft (15 bzw. 115) mit einem gewindeartigen Endabschnitt (33, 34 bzw. 133, 134) an jedem Ende und aus einer dritten und vierten Überwurfmutter (41) und Durchführungsdichtungs- (42) Unteranordnung besteht, die auf entgegengesetzte gewindeartige Endabschnitte (33, 34 bzw. 133, 134) aufgeschraubt sind, wobei jede der Überwurfmutter- und Durchführungsdichtungsunteranordnungen zu jeder anderen Überwurfmutter- und Durchführungsdichtungsunteranordnung identisch ist.

8. Verbindungsanordnung nach einem der Ansprüche 1 bis 7, **dadurch gekennzeichnet, dass** bei Zusammenbau die Enden (68) der rohrförmigen Segmente (51) entgegengesetzt zu den Köpfen (57) jedes Paares von Durchführungsdichtungen zum Montieren von Überwurfmuttern (41) aneinander anliegen.

## Revendications

1. Ensemble de liaison reliant un bras (Y) d'une barre de torsion de stabilisateur à un bras de suspension (X) dans un système de suspension de véhicule, comprenant un axe (15 ; 115) avec une section d'extrémité filetée (33, 34 ; 133, 134), et une paire de bagues (42) en matériau élastique qui sont montées sur l'axe (15 ; 115) pour recevoir entre elles un bras (X, Y),
**caractérisé en ce que** chaque bague (42) est montée sur un segment tubulaire (51) à filetage intérieur d'un manchon-écrou (41), ledit manchon-écrou (41) ayant une tête en forme de disque (57) à son extrémité éloignée du bras (X ou Y), chaque manchon-écrou (41) étant vissé sur la section d'extrémité filetée (33, 34 ; 133, 134) de l'axe (15 ; 115) avec sa tête (57) orientée à l'opposé de la tête (57) de l'autre manchon-écrou (41) de la paire de bagues (41), et la tête (57) du manchon-écrou (41) éloignée de l'extrémité libre de l'axe (15 ; 115) étant en appui contre une butée formée par le matériau de l'axe (15 ; 115) sous forme d'un chanfrein (35, 36) ou de décrochements (135, 136).

2. Ensemble de liaison selon la revendication 1, **caractérisé en ce que** chaque tête (57) a une périphérie polygonale (58).

3. Ensemble de liaison selon la revendication 1 et/ou 2, **caractérisé en ce que** l'axe (15 ; 115) a des sections d'extrémité filetées (33, 34 ; 133, 134) à ses deux extrémités, des paires de bagues (42) montées sur des manchons-écrous (41) étant vissées sur les deux sections d'extrémité.

4. Ensemble de liaison selon l'une des revendications 1 à 3, **caractérisé en ce que** toutes les bagues (42) sont identiques et tous les manchons-écrous (41) sont identiques.

5. Ensemble de liaison selon l'une des revendications 1 à 4, **caractérisé en ce que** la tête (57) de chaque manchon-écrou (41) a la forme d'une coupelle, et chaque bague (42) présente à une extrémité une surface courbe (64) de forme complémentaire par rapport à la tête en forme de coupelle (57), et une face opposée (63) pour recevoir un bras (X, Y).

6. Ensemble de liaison selon l'une des revendications 1 à 5, **caractérisé en ce que** les bagues (42) sont montées avec un ajustement serré sur les segments tubulaires (51) des manchons-écrous (41).

7. Ensemble de liaison selon la revendication 3, fourni sous forme de kit d'assemblage composé de trois sous-ensembles de composants, comprenant des premier et deuxième sous-ensembles de composants, composés chacun d'un manchon-écrou (41) et d'une bague (42) montée sur celui-ci, et un troisième sous-ensemble de composants, composé d'un axe (15 ; 115) avec une section d'extrémité filetée (33, 34 ; 133, 134) à chaque extrémité, et d'un troisième et d'un quatrième sous-ensemble à manchon-écrou (41) et bague (42) montés sur les sections d'extrémité filetées opposées (33, 34 ; 133, 134), chacun des sous-ensembles à manchon-écrou et bague étant identique à chaque autre sous-ensemble manchon-écrou et bague.

8. Ensemble de liaison selon l'une des revendications 1 à 7, **caractérisé en ce que**, une fois qu'il est assemblé, les extrémités (68) des segments tubulaires (51) opposées aux têtes (57) de chaque paire de manchons-écrous (41) de montage de bague butent les unes contre les autres.
